# EUROPÄISCHE PATENTSCHRIFT

(11) **EP 1 409 309 B1**
(45) Veröffentlichungstag und Bekanntmachung des Hinweises auf die Patenterteilung: **01.10.2008**
(21) Anmeldenummer: 02791456.3
(22) Anmeldetag: 17.07.2002
(51) Int. Cl.: B60T 7/12

(54) **VERMEIDUNG DES RÜCKROLLENS EINES FAHRZEUGES**
PREVENTING REVERSE CREEP IN A MOTOR VEHICLE
PREVENTION DU ROULAGE ARRIERE DANS UN VEHICULE

(30) Priorität: 21.07.2001 DE 10135744
(43) Veröffentlichungstag der Anmeldung: 21.04.2004
(73) Patentinhaber: ZF FRIEDRICHSHAFEN Aktiengesellschaft, 88038 Friedrichshafen (DE)
(72) Erfinder: HÄRDTLE, Wilhelm, 88677 Markdorf (DE); SCHWAB, Manfred, 88212 Ravensburg (DE)
(86) Internationale Anmeldenummer: PCT/EP2002/007911
(87) Internationale Veröffentlichungsnummer: WO 2003/011663

(56) Entgegenhaltungen:
- EP-A- 0 507 466
- DE-A- 19 525 552
- DE-A- 19 625 355
- DE-A- 19 711 515
- US-A- 5 052 531

## Beschreibung

Die Erfindung betrifft eine Vorrichtung und ein Verfahren zur Vermeidung des Zurückrollens eines Fahrzeuges nach dem Oberbegriff des Anspruchs 1.

Für die Applikation von automatisierten Schaltgetrieben speziell in Nutzfahrzeugen wird eine Rückrollsperre oder eine Bergstarthilfe (hill-start-aid, hill-holder) als Rückrollsicherung gewünscht. Dieser Wunsch ergibt sich insbesondere auch daher, dass automatisierte Schaltgetriebe zunehmend auch in Anwendungsfeldern eingesetzt werden, die bisher Wandlerautomatgetrieben vorbehalten waren. Wandlerautomatgetriebe haben jedoch aufgrund der Wandlercharakteristik eine Kriechneigung, die ein Zurückrollen verhindert oder zumindest vermindert.

Es sind Lösungsansätze für automatisierte Schaltgetriebe bekannt geworden, bei denen eine elektronisch gesteuerte Fahrzeugbremse zu der Funktionalität einer Rückrollsperre eingesetzt werden kann. Eine Funktionslogik verknüpft das Lösen der eingelegten Fahrzeugbremse mit einem Signal des ansteigenden Kupplungsmomentes der das Schaltgetriebe und den Motor verbindenden Reibungskupplung. Durch diese Überschneidung von einem abfallenden Bremsmoment an der Fahrzeugbremse und einem ansteigenden Zugmoment der Fahrzeugkupplung kann die Funktion der Rückrollsperre dargestellt werden.

Aus der gattungsgemäßen EP 280 818 ist ein Bremsensystem bekannt geworden, das über eine Vorrichtung verfügt, die die Position der Fahrzeugkupplung erkennt und ab einem vorbestimmten Drehmoment, das vom Fahrzeugmotor an die Fahrzeugräder übertragen wird, ein Ventil im Bremssystem öffnet, um den Bremsdruck zu reduzieren, damit das Fahrzeug anfahren kann.

Beispielhaft ist aus der DE 19826068 eine Getriebebremse bekannt geworden, die im Fahrzeuggetriebe angeordnet ist und dort zur Synchronisierung des Getriebes beiträgt, indem die Massen des Getriebes bei der Synchronisierung von mit unterschiedlichen Drehzahlen im Getriebe umlaufenden Bauteilen bei einem Schaltvorgang durch die Getriebebremse abgebremst werden, um damit den Schaltvorgang zu beschleunigen. Die Getriebebremsen sind üblicherweise als Lamellenbremsen ausgebildet und werden von einem Druckmedium über einen Kolben angesteuert.

Der Erfindung liegt die Aufgabe zugrunde, die Funktionalität der Rückrollbremse einsetzen zu können und gleichzeitig sicherzustellen, dass auch bei Störungen oder einer Fehlbedienung des Fahrzeugbremssystems keine kritischen Zustände entstehen.

Die Aufgabe wird gelöst durch eine Vorrichtung und ein Verfahren zur Verhinderung des Zurückrollens eines Fahrzeugs mit den Merkmalen der Ansprüche 1 und 7. Ausgestaltungen sind Gegenstand von Unteransprüchen.

Es wird eine Vorrichtung zur Verhinderung des Zurückrollens eines Fahrzeugs vorgeschlagen mit Bremsen eines Fahrzeugbremssystems, das eine Fahrzeugbremsdruckbeeinflussungseinrichtung, eine Einrichtung, die geeignet ist, eine Vorwärtsbewegung des Fahrzeugs zu erkennen, und eine Steuereinrichtung, die mit der Fahrzeugbremsdruckbeeinflussungseinrichtung und der Einrichtung verbunden ist, umfasst. Es ist eine auf ein Getriebe des Kraftfahrzeuges einwirkende Bremse vorgesehen, die mit der Steuereinrichtung verbunden ist, und die während eines Stillstandes oder eines nahezu Stillstandes des Fahrzeuges von der Steuereinrichtung zusätzlich zum Fahrzeugbremssystem betätigt werden kann. Weiter wird ein Verfahren zur Verhinderung des Zurückrollens eines Fahrzeuges vorgeschlagen mit einem Fahrzeugbremssystem, das eine Fahrzeugbremsdruckbeeinflussungseinrichtung, eine Einrichtung, die geeignet ist, eine Vorwärtsbewegung des Fahrzeugs zu erkennen, und eine Steuereinrichtung, die mit der Fahrzeugbremsdruckbeeinflussungseinrichtung und der Einrichtung verbunden ist, umfasst. Dabei wird in der Steuereinrichtung ein Signal erzeugt, das bei einem Stillstand oder nahezu Stillstand des Fahrzeuges eine auf ein Getriebe des Kraftfahrzeugs einwirkende Bremse zusätzlich zu den Bremsen des Fahrzeugbremssystems betätigt. Bei Erkennen einer Vorwärtsbewegung des Fahrzeugs reduziert die Steuereinrichtung den Bremsdruck in der Fahrzeugbremsdruckbeeinflussungseinrichtung und löst die auf das Getriebe einwirkende Bremse. In einer vorteilhaften Ausgestaltung ist die Fahrzeugbremsdruckbeeinflussungseinrichtung ein veränderbares Bremskrafthalteventil. In einer Ausbildungsform ist die Einrichtung, die geeignet ist, eine Vorwärtsbewegung des Fahrzeugs zu erkennen, ein Kupplungswegsensor und dabei wird von der Steuereinrichtung das Überschreiten eines vorgegebenen Kupplungsverstellweges erkannt. In einer anderen Ausführung ist die Einrichtung, die geeignet ist, eine Vorwärtsbewegung des Fahrzeugs zu erkennen, ein das von der Kupplung übertragene Moment erkennender Sensor. Dabei wird von der Steuereinrichtung das Überschreiten eines vorgegebenen Kupplungsmomentes erkannt. Vorteilhafte Ausführungen umfassen einen Drehzahlsensor im Antriebstrang, der eine Drehrichtung erfassen kann, und durch den aus einer vorhandenen Drehzahl bei einer bestimmten Drehrichtung auf eine Vorwärtsbewegung des Fahrzeugs geschlossen werden kann. Eine dieser Ausführungen weist den Drehzahlsensor an der Abtriebswelle des Getriebes auf, während in einer anderen Ausführung der ABS-Sensor an einem Fahrzeugrad verwendet wird, um daraus über Drehzahl und Drehrichtung die Vorwärtsbewegung zu erkennen.
Eine Ausgestaltung zeigt die auf das Getriebe einwirkende Bremse als eine Lamellenbremse, die auf einer Vorgelegewelle des Schaltgetriebes des Fahrzeugs angeordnet ist, während in einer weiteren Ausgestaltung die auf das Getriebe einwirkende Bremse eine Lamellenbremse ist, die auf einer Eingangswelle des Schaltgetriebes des Fahrzeugs angeordnet ist. Eine in einem Differenzial im Antriebsstrang angeordnete Lamellenbremse kann ebenfalls verwendet werden. Gleichermaßen kann in einer Ausführungsform auch eine Getriebeölpumpe als Bremse wirken, die dann über ein Ventil auf Nullförderung gestellt und gesperrt wird. Durch die Absperrung des Durchflusses lässt sich ein ausreichendes Bremsmoment erreichen. Ebenfalls die Funktion einer Bremse kann auch durch das Verspannen des Getriebes erreicht werden, wenn beispielsweise durch eine automatisierte Schaltung zwei Gangstufen eines Schaltgetriebes gleichzeitig geschaltet werden und dadurch das Schaltgetriebe blockiert.

Die im Getriebe angeordnete Bremse, die üblicherweise als Funktionselement zur Synchronisierungsunterstützung verwendet wird, indem die Bremse die rotierenden Massen im Getriebe derart abbremst, dass gleiche Drehzahlen der zur Drehmomentübertragung zusammengeschlossenen Elemente des Getriebes erreicht werden, wird unverändert weiterverwendet und dient auch als ein unterstützendes Funktionselement zur Rückrollverhinderung. Bei einer betätigten Rückrollsperre des Fahrzeugbremssystems und dem durch entsprechende Sensoren des Fahrzeuges erkannten Stillstandes des Fahrzeuges, was beispielsweise durch Sensoren des ABS-Systems erkennbar ist, wird zusätzlich die Bremse im Getriebe des Fahrzeugs eingelegt. Dieses Getriebe ist vorzugsweise das Fahrzeugschaltgetriebe selbst. Dadurch wird in einem Störungsfall der Fahrzeugbremsen oder bei einer Fehlbedienung durch den Fahrzeugführer die Gefahr eines Zurückrollens des Fahrzeuges vermieden.

Durch die erfindungsgemäße Vorrichtung wird eine zusätzliche Absicherung (Redundanz) beim Versagen der üblicherweise zur Erfüllung einer Rückrollverhinderungsfunktion vorgesehenen Systeme erreicht. Eine erweiterte Sicherheit des Gesamtsystems wird erzielt. Anwendbar ist die Vorrichtung sowohl im Zusammenhang mit elektronisch gesteuerten Bremsen, als auch mit üblicherweise pneumatisch oder hydraulisch betätigten Bremsen über Pedaldruck durch den Fahrer.

Die Erfindung wird anhand einer Zeichnung näher erläutert.

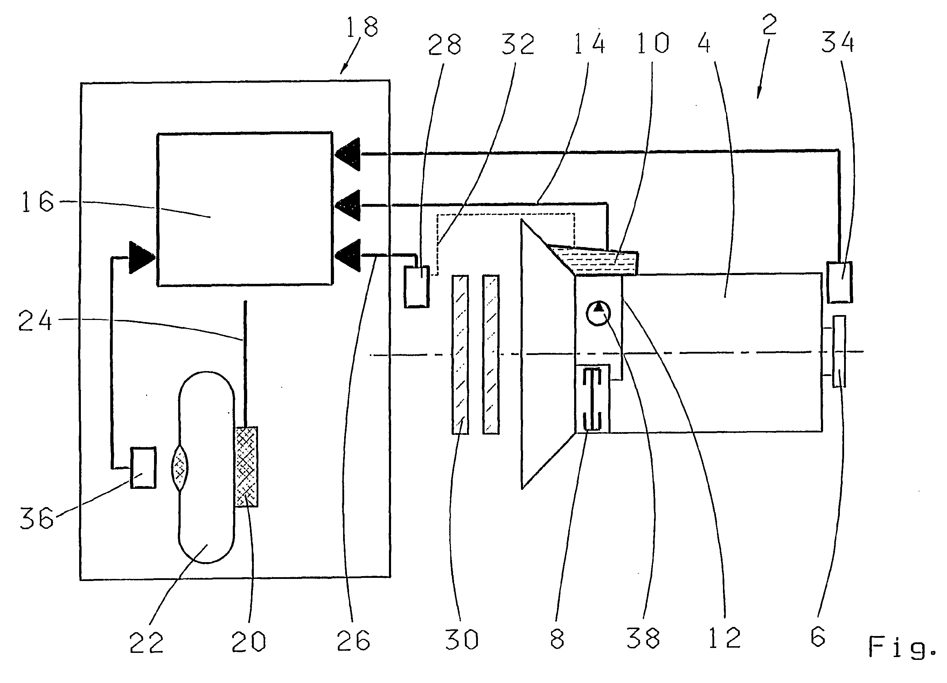

Es zeigt die einzige Figur schematisch ein Fahrzeugschaltgetriebe 2 mit einem Getriebegehäuse 4 und einer Abtriebswelle 6. In dem Getriebegehäuse 4 ist eine Bremse 8 angeordnet, die auf rotierende Massen innerhalb des Getriebes 2 einwirkt. Die Betätigung der Bremse 8 erfolgt von einer Getriebesteuerung 10, die über eine Leitung 12 mit der Bremse 8 in Verbindung steht. Die Getriebesteuerung 10 steht über eine Leitung 14 auch mit einer elektronischen Bremsensteuereinrichtung 16 eines Fahrzeugbremssystems 18 in Verbindung. Eine Einrichtung zur Beeinflussung des Fahrzeugbremsdruckes 20 ist mit dem hier nur einfach dargestellten Fahrzeugrad 22 verbunden und erhält von der Bremssteuereinrichtung 16 Signale über eine Verbindungsleitung 24. Ebenfalls mit der Bremssteuereinrichtung 16 ist über eine Leitung 26 ein Sensor 28 verbunden, der an einer Fahrzeugkupplung 30 entweder einen Verstellweg oder ein übertragenes Moment erkennt und der Bremssteuereinrichtung 16 mitteilt. Bei einem Fahrzeuggetriebe, das neben einer automatischen Schaltung auch eine automatische Kupplung vorsieht, kann der Sensor 28 auch direkt mit der Getriebesteuerung 10 verbunden sein, was durch die gestrichelte Leitung 32 dargestellt ist, so dass die Signale von der Kupplung 30 dann von der Getriebesteuerung 10 an die Bremssteuereinrichtung 16 weitergeleitet werden. Als weitere alternative Einrichtungen zur Erkennung einer Vorwärtsbewegung des Fahrzeugs ist ein Drehzahlsensor 34 gezeigt, der die Drehzahl und Drehrichtung an der Abtriebswelle 6 erfasst und der Steuereinrichtung 16 vermittelt. Ein am Fahrzeugrad 22 vorgesehener ABS-Drehzahlsensor 36 kann ebenfalls Drehzahl und Drehrichtung des Fahrzeugs ermitteln und der Steuereinrichtung 16 vermitteln. Selbstverständlich müssen nicht alle die Vorwärtsbewegung erkennenden Sensoren gleichzeitig vorgesehen sein, sondern können alternativ das entsprechende Signal erzeugen.

Bei stehendem Fahrzeug und von der Bremssteuereinrichtung 16 eingelegter Rückrollsperre für das Fahrzeug wird die Bremse 8 zusätzlich eingelegt und damit das Getriebe 2 gesperrt. Der in Richtung auf die Fahrzeugräder nachfolgende Teil des Antriebsstranges ist vom Getriebe 2 bis zu den Rädern 22 blockiert. Damit ist eine zusätzliche Absicherung des Fahrzeuges gegen ein Zurückrollen gewährleistet. Wird nun ein Anfahrvorgang vom Fahrzeugführer eingeleitet, wird von den Sensoren 28, 34 oder 36 eine Vorwärtsbewegung des Fahrzeugs erkannt. Wenn die Bremssteuereinrichtung 16 einen solchen eingeleiteten Anfahrvorgang erkennt, wird die Einrichtung zur Beeinflussung des Fahrzeugbremsdrucks 20 derart angesteuert, dass der Bremsdruck verringert wird. Die Bremse 8 wird gelöst und das Getriebe 2 ist nicht länger gesperrt, so dass das Fahrzeug anfahren kann. Eine Getriebeölpumpe 38 im Getriebe 2, die ansonsten zur Schmierung des Getriebes 2 verwendet wird, kann im Stillstand oder nahezu Stillstand des Fahrzeugs auch eine Bremsfunktion übernehmen. Dies geschieht durch eine Absperrung des Durchflusses durch die Ölpumpe 38.

### Bezugszeichen

- 2: Fahrzeugschaltgetriebe
- 4: Getriebegehäuse
- 6: Abtriebswelle
- 8: Bremse
- 10: Getriebesteuerung
- 12: Leitung
- 14: Leitung
- 16: Bremsensteuereinrichtung
- 18: Fahrzeugbremssystem
- 20: Einrichtung zur Beeinflussung des Fahrzeugbremsdruckes
- 22: Fahrzeugrad
- 24: Verbindungsleitung
- 26: Leitung
- 28: Sensor
- 30: Fahrzeugkupplung
- 32: Leitung
- 34: Drehzahlsensor
- 36: Drehzahlsensor
- 38: Ölpumpe

## Patentansprüche

1. Vorrichtung zur Verhinderung des Zurückrollens eines Fahrzeugs mit Fahrzeugbremssystem (18), das eine Fahrzeugbremsdruckbeeinflussungseinrichtung (20), eine Einrichtung (28, 34, 36), die geeignet ist, eine Vorwärtsbewegung des Fahrzeugs zu erkennen, und eine Steuereinrichtung (16), die mit der Fahrzeugbremsdruckbeeinflussungseinrichtung (20) und der Einrichtung (28, 34, 36) verbunden ist, umfasst, **dadurch gekennzeichnet , dass** eine auf ein Getriebe (2) des Kraftfahrzeuges einwirkende Bremse (8, 38) vorgesehen ist, die mit der Steuereinrichtung (16) verbunden ist, und die während eines Stillstandes oder nahezu Stillstandes des Fahrzeuges von der Steuereinrichtung (16) zusätzlich zu den Bremsen des Fahrzeugbremssystems (18) betätigbar ist.

2. Vorrichtung zur Verhinderung des Zurückrollens eines Fahrzeugs nach Anspruch 1, **dadurch gekennzeichnet, dass** die Fahrzeugbremsdruckbeeinflussungseinrichtung (20) ein veränderbares Bremskrafthalteventil ist.

3. Vorrichtung zur Verhinderung des Zurückrollens eines Fahrzeugs nach Anspruch 1 oder 2, **dadurch gekennzeichnet, dass** die Einrichtung, die geeignet ist, eine Vorwärtsbewegung des Fahrzeugs zu erkennen, ein Kupplungswegsensor (28) ist.

4. Vorrichtung zur Verhinderung des Zurückrollens eines Fahrzeugs nach Anspruch 1 oder 2, **dadurch gekennzeichnet , dass** die Einrichtung, die geeignet ist, eine Vorwärtsbewegung des Fahrzeugs zu erkennen, ein das von der Kupplung (30) übertragene Moment erkennender Sensor (28) ist.

5. Vorrichtung zur Verhinderung des Zurückrollens eines Fahrzeugs nach Anspruch 1 oder 2, **dadurch gekennzeichnet, dass** die Einrichtung, die geeignet ist, eine Vorwärtsbewegung des Fahrzeugs zu erkennen, ein drehrichtungserkennender Drehzahlsensor (34, 36) im Antriebsstrang ist.

6. Vorrichtung zur Verhinderung des Zurückrollens eines Fahrzeugs nach Anspruch 5, **dadurch gekennzeichnet , dass** der Drehzahlsensor ein Getriebeabtriebswellendrehzahlsensor (34) ist.

7. Vorrichtung zur Verhinderung des Zurückrollens eines Fahrzeugs nach Anspruch 5, **dadurch gekennzeichnet, dass** der Drehzahlsensor ein ABS-Drehzahlsensor (36) am Fahrzeugrad (22) ist.

8. Vorrichtung zur Verhinderung des Zurückrollens eines Fahrzeugs nach einem der Ansprüche 1 bis 7, **dadurch gekennzeichnet , dass** die auf das Getriebe einwirkende Bremse eine Lamellenbremse (8) ist, die auf einer Vorgelegewelle des Schaltgetriebes (2) des Fahrzeugs angeordnet ist.

9. Vorrichtung zur Verhinderung des Zurückrollens eines Fahrzeugs nach einem der Ansprüche 1 bis 7, **dadurch gekennzeichnet , dass** die auf das Getriebe einwirkende Bremse (8, 38) eine Lamellenbremse ist, die auf einer Eingangswelle des Schaltgetriebes (2) des Fahrzeugs angeordnet ist.

10. Vorrichtung zur Verhinderung des Zurückrollens eines Fahrzeugs nach einem der Ansprüche 1 bis 7, **dadurch gekennzeichnet , dass** die auf das Getriebe (2) einwirkende Bremse eine Getriebeölpumpe (38) ist, die gegen Durchfluss absperrbar ist.

11. Vorrichtung zur Verhinderung des Zurückrollens eines Fahrzeugs nach einem der Ansprüche 1 bis 7, **dadurch gekennzeichnet , dass** die auf das Getriebe (2) einwirkende Bremse (8, 38) durch ein Verspannen des Getriebes (2) durch gleichzeitiges Einlegen von zwei Gängen herstellbar ist.

12. Verfahren zur Verhinderung des Zurückrollens eines Fahrzeuges mit Fahrzeugbremssystem (18), das eine Fahrzeugbremsdruckbeeinflussungseinrichtung (20), eine Einrichtung (28, 34, 36), die geeignet ist, eine Vorwärtsbewegung des Fahrzeugs zu erkennen, und eine Steuereinrichtung (16), die mit der Fahrzeugbremsdruckbeeinflussungseinrichtung (20) und der Einrichtung (28, 34, 36) verbunden ist, umfasst, **dadurch gekennzeichnet, dass** in der Steuereinrichtung (16) ein Signal erzeugt wird, das bei einem Stillstand oder nahezu Stillstand des Fahrzeuges eine auf ein Getriebe (2) des Fahrzeugs einwirkende Bremse (8, 38) zusätzlich zu den Bremsen des Fahrzeugbremssystems (18) betätigt, und dass bei Erkennen einer Vorwärtsbewegung des Fahrzeugs die Steuereinrichtung (16) den Bremsdruck in der Fahrzeugbremsdruckbeeinflussungseinrichtung (20) reduziert und die auf das Getriebe (2) einwirkende Bremse (8, 38) löst.

## Claims

1. Device for preventing rearward movement of a vehicle with a vehicle brake system (18) comprising a brake-pressure-influencing device (20), a device (28, 34, 36) suited for detecting forward movement of the vehicle, and a control device (16) connected to the vehicle brake-pressure-influencing device (20) and the forward-movement-detecting device (28, 34, 36), **characterized in that** a brake (8, 38) acting on a transmission (2) of the motor vehicle is provided, which is connected to the control device (16) and which during standstill or near-standstill of the vehicle can be actuated by the control device (16) in addition to the brakes of the vehicle brake system (18).

2. Device for preventing rearward movement of a vehicle according to claim 1, **characterized in that** the vehicle brake-pressure-influencing device (20) is a variable brake-force-maintaining valve.

3. Device for preventing rearward movement of a vehicle according to claim 1 or 2, **characterized in that** the device suited for detection of a forward movment of the vehicle is a clutch control travel sensor (28).

4. Device for preventing rearward movement of a vehicle according to claim 1 or 2, **characterized in that** the device suited for detection of a forward movement of the vehicle is a sensor (28) recognizing the torque transmitted by the clutch (30).

5. Device for preventing rearward movement of a vehicle according to claim 1 or 2, **characterized in that** the device suited for detection of a forward movement is a speed sensor (34, 36) in the driveline recognizing the direction of rotation.

6. Device for preventing rearward movement of a vehicle according to claim 5, **characterized in that** the speed sensor is a transmission output shaft speed sensor (34).

7. Device for preventing rearward movement of a vehicle according to claim 5, **characterized in that** the speed sensor is an ABS speed sensor (36) on the vehicle wheel (22).

8. Device for preventing rearward movement of a vehicle according to one of the claims 1 thru 7, **characterized in that** the brake acting on the transmission is a multidisk brake (8) arranged on a countershaft of the manual transmission (2) of the vehicle.

9. Device for preventing rearward movement of a vehicle according to one of the claims 1 thru 7, **characterized in that** the brake acting on the transmission (8, 36) is a multidisk brake arranged on an input shaft of the manual transmission (2) of the vehicle.

10. Device for preventing rearward movement of a vehicle according to one of the claims 1 thru 7, **characterized in that** the brake acting on the transmission (2) is a transmission-fluid pump (38), the flow of which can be blocked.

11. Device for preventing rearward movement of a vehicle according to one of the claims 1 thru 7, **characterized in that** the brake (8, 38) acting on the transmission (2) can be realized through twisting of the transmission (2) by means of simultaneous engagement of two gears.

12. Method for preventing rearward movement of a vehicle with vehicle brake system (18) comprising a vehicle brake-pressure-influencing device (20), a device (28, 34, 36) suited for detection of a forward movement of the vehicle, and a control device (16) connected to the vehicle brake-pressure-influencing device (20) and the forward-movement-detecting device (28, 34, 36), **characterized in that** a signal is generated in the control device (16) which in the event of a standstill or near-standstill of the vehicle actuates a brake (8, 38) acting on the transmission (2) of the vehicle in addition to the brakes of the vehicle brake system (18), and that upon recognition of a forward movement of the vehicle, the control device (16) will reduce the brake pressure in the vehicle brake-pressure-influencing device (20) and release the brake (8, 38) acting on the transmission (2).

## Revendications

1. Dispositif pour éviter le recul d'un véhicule avec un système de freinage de véhicule (18), celui-ci comprenant un dispositif influençant la pression de freinage du véhicule (20), un dispositif (28, 34, 36) apte à détecter un mouvement en avant du véhicule, et un dispositif de commande (16) étant lié au dispositif influençant la pression de freinage du véhicule (20) et au dispositif (28, 34, 36), **caractérisé en ce que** est prévu un frein (8, 38) agissant sur une boîte de vitesses (2) du véhicule automobile, ce frein étant lié au dispositif de commande (16) et pouvant être actionné pendant un arrêt ou presque-arrêt du véhicule par le dispositif de commande (16) et cela en plus des freins du système de freinage du véhicule (18).

2. Dispositif pour éviter le recul d'un véhicule selon la revendication 1, **caractérisé en ce que** le dispositif influençant la pression de freinage du véhicule (20) est une soupape de maintien de la force de freinage dont la conception est modulable.

3. Dispositif pour éviter le recul d'un véhicule selon la revendication 1 ou 2, **caractérisé en ce que** le dispositif qui est apte à détecter un mouvement en avant du véhicule, est un capteur d'embrayage (28).

4. Dispositif pour éviter le recul d'un véhicule selon la revendication 1 ou 2, **caractérisé en ce que** le dispositif qui est apte à détecter un mouvement en avant du véhicule, est un capteur (28) détectant le couple transmis par l'embrayage (30).

5. Dispositif pour éviter le recul d'un véhicule selon la revendication 1 ou 2, **caractérisé en ce que** le dispositif qui est apte à détecter un mouvement en avant du véhicule, est un capteur de régime détectant le sens de rotation (34, 36) intégré dans la chaîne cinématique.

6. Dispositif pour éviter le recul d'un véhicule selon la revendication 5, **caractérisé en ce que** le capteur de régime est un capteur de régime de l'arbre de sortie de la boîte de vitesses (34).

7. Dispositif pour éviter le recul d'un véhicule selon la revendication 5, **caractérisé en ce que** le capteur de régime est un capteur de régime du système ABS (36) monté sur la roue du véhicule (22).

8. Dispositif pour éviter le recul d'un véhicule selon une des revendications 1 à 7, **caractérisé en ce que** le frein agissant sur la boîte de vitesses est un frein multidisque (8), celui-ci étant disposé sur un arbre intermédiaire de la boîte mécanique (2) du véhicule.

9. Dispositif pour éviter le recul d'un véhicule selon une des revendications 1 à 7, **caractérisé en ce que** le frein agissant sur la boîte de vitesses (8, 36) est un frein multidisque, celui-ci étant disposé sur un arbre d'entrée de la boîte mécanique (2) du véhicule.

10. Dispositif pour éviter le recul d'un véhicule selon une des revendications 1 à 7, **caractérisé en ce que** le frein agissant sur la boîte de vitesses (2) est une pompe à huile pour transmission (38) qui peut être verrouillée contre le passage d'huile.

11. Dispositif pour éviter le recul d'un véhicule selon une des revendications 1 à 7, **caractérisé en ce que** le frein (8, 38) agissant sur la boîte de vitesses (2) peut être réalisé par une mise sous précontrainte de la boîte de vitesses (2) en engageant en même temps deux rapports.

12. Procédé pour éviter le recul d'un véhicule avec un système de freinage de véhicule (18), celui-ci comprenant un dispositif influençant la pression de freinage du véhicule (20), un dispositif (28, 34, 36) apte à détecter un mouvement en avant du véhicule, et un dispositif de commande (16) étant lié au dispositif influençant la pression de freinage du véhicule (20) et au dispositif (28, 34, 36), **caractérisé en ce que** dans le dispositif de commande (16) est généré un signal, celui-ci actionnant en cas d'un arrêt ou presque-arrêt du véhicule un frein (8, 38) agissant sur une boîte de vitesses (2) du véhicule, et cela en plus des freins du système de freinage du véhicule (18), et **en ce que** en cas de détection d'un mouvement en avant du véhicule le dispositif de commande (16) réduit la pression de freinage dans un dispositif influençant la pression de freinage du véhicule (20) et relâche le frein (8, 38) agissant sur la boîte de vitesses (2).
